Europäisches Patentamt

**European Patent Office**

Office européen des brevets

(11) Veröffentlichungsnummer : **0 068 503**
**B1**

(12) **EUROPÄISCHE PATENTSCHRIFT**

(51) Int. Cl.⁴ : **G 01 N 27/90**

(45) Veröffentlichungstag der Patentschrift :
25.03.87

(21) Anmeldenummer : **82105819.5**

(22) Anmeldetag : **30.06.82**

(54) Verfahren und Vorrichtung zur Werkstoffprüfung nach dem Wirbelstromprinzip.

(30) Priorität : **30.06.81 DE 3125732**

(43) Veröffentlichungstag der Anmeldung :
**05.01.83 Patentblatt 83/01**

(45) Bekanntmachung des Hinweises auf die Patenterteilung : **25.03.87 Patentblatt 87/13**

(84) Benannte Vertragsstaaten :
**BE FR IT SE**

(56) Entgegenhaltungen :
**DE-A- 2 814 125**
**DE-A- 2 825 958**
**DE-A- 3 022 078**

(73) Patentinhaber : **Nukem GmbH**
**Rodenbacher Chaussee 6 Postfach 11 00 80**
**D-6450 Hanau 11 (DE)**

(72) Erfinder : **Hüschelrath, Gerhard, Dr.**
**Am Klingergraben 7**
**D-8752 Laufach-Frohnhofen (DE)**
Erfinder : **Abend, Klaus, Dr.**
**Am Kirschberg 1**
**D-6450 Büdingen (DE)**
Erfinder : **Ursula Ruth**
**Gartenstrasse 13**
**D-6451 Ronneburg 1 (DE)**

(74) Vertreter : **Stoffregen, Hans-Herbert, Dr. Dipl.-Phys. et al**
**Patentanwälte Strasse & Stoffregen Salzstrasse 11a**
**Postfach 2144**
**D-6450 Hanau/Main 1 (DE)**

**Beschreibung**

Die Erfindung bezieht sich auf ein Werkstoffprüfverfahren der im Oberbegriff des Anspruchs 1 beschriebenen Gattung und auf eine Vorrichtung zur Durchführung der Werkstoffprüfverfahrens.

Ein Verfahren der im Oberbegriff des Anspruchs 1 beschriebenen Gattung und eine Vorrichtung gemäß dem Oberbegriff des Anspruchs 7 zur Durchführung des Verfahrens sind aus der DE-A-2 814 125 bekannt. Mit dem in der DE-A-2 814 125 angegebenen Verfahren können quantitative Aussagen über Qualitätsmerkmale der Prüflinge erhalten werden. Der Phasenwinkel und die Amplitude der von dem sekundären Feld in der Spule induzierten Spannung hängen von der magnetischen Kopplung und den Eigenschaften des jeweiligen Prüfobjektes ab. Daher lassen sich Abmessungen, Abstandsänderungen, die Leitfähigkeit, die Gefügeausbildung, Legierungsunterschiede sowie Risse in den Prüflingen feststellen. Bei dem bekannten Verfahren werden die verschiedenen Frequenzen nacheinander an die Spule gelegt. Die Real- und Imaginäranteile werden frequenz-seriell ermittelt. Die Ausgangsgröße der Spule wird nach einer Verstärkung auf zwei Kanäle aufgeteilt. Im ersten Kanal wird die Ausgangsgröße zur Gewinnung des Realanteils mit einer Sinusspannung multipliziert, die die gleiche Phase und Frequenz wie die an die Spule angelegte Spannung hat. Im zweiten Kanal wird die Ausgangsgröße zur Gewinnung des Imaginäranteils mit einer Cosinusspannung, die gegen die Sinusspannung um 90° phasenverschoben ist, multipliziert. Den Multiplizierern sind jeweils Tiefpässe nachgeschaltet, mit denen Analog-Digital-Wandler verbunden sind, deren Ausgänge jeweils an Subtrahierer angeschlossen sind, die weiterhin mit Speichern für die Basiskompensationswerte verbunden sind. Gemäß der DE-A-2 814 125 werden die gemessenen Werte des Realanteils und des Imaginäranteils bei der jeweiligen Prüffrequenz in einem Festwertspeicher gespeichert und die neuen Meßwerte von den gespeicherten Werten subtrahiert und somit eine Kompensation für jeden Meßzyklus erzielt.

Es ist auch ein Wirbelstromprüfgerät bekannt, bei dem Empfängerspulen, die in Differenz geschaltet sind, mit einem Verstärker verbunden sind. Der Verstärker speist zwei Phasendiskriminatoren, die von je zwei in der Phase um 90° verschiedenen Signalen beaufschlagt sind. Die Ausgangssignale der Phasendiskriminatoren werden je über einen Tiefpaß einer Trennstufe, einen Empfindlichkeitsregler, einen Verstärker, ein Geschwindigkeitsanpaßfilter und ein Phasendrehglied auf einen Eingang eines Oszillographen übertragen. Jeder Kanal enthält eine Kompensationseinrichtung, deren Ausgang mit einer Trennstufe verbunden ist. Mit den Kompensationseinrichtungen wird eine Nullkompensation des Ausgangssignals der Trennstufen erzeugt. Die Kompensationseinrichtungen sind so ausgebildet, daß sie auch bei größeren Zeitkonstanten des Wirbelstromprüfgerätes Kompensationsspannungen ohne nennenswertes Überschwingen mit geringen Verzögerungszeiten erzeugen (DE-A-2 825 958).

Bekannt ist ferner ein Gerät für die Wirbelstromprüfung, bei dem Prüfspulen und Übertrager für die Ausgabe von Ausgangsgrößen in einer Impedanzbrücke angeordnet sind (DE-A-3 022 078). Die Prüffrequenzen werden bei diesem Gerät gleichzeitig an die Spulen angelegt. Zur frequenzmäßigen Trennung der Komponenten der Ausgangsgröße sind Bandfilter vorhanden, denen jeweils Summierverstärker vorgeschaltet sind. Den Summierverstärkern werden einerseits die Ausgangsgröße und andererseits Abgleichsignale zugeführt, durch die bestimmte Frequenzen in der Ausgangsgröße ausgelöscht werden. Die Bandfilter speisen Amplitudendetektoren, an die ein Mischer angeschlossen ist, durch den unerwünschte Signalparameter beseitigt werden.

Der Erfindung liegt die Aufgabe zugrunde, einerseits ein Verfahren der im Oberbegriff des Anspruchs 1 beschriebenen Gattung derart weiterzuentwickeln, daß trotz vorhandener Störsignale von hohem Signalpegel bei einem für die Fehlererfassung maßgebenden Signal mit geringerem Signalpegel Übersteuerungen der Eingangsverstärker bei hohem Verstärkungsfaktor vermieden werden und der Dynamikbereich möglichst gut ausgenutzt wird, und andererseits eine Vorrichtung für die Durchführung des Verfahrens zu entwickeln.

Die Aufgabe wird für das Verfahren erfindungsgemäß dadurch gelöst, daß in Abhängigkeit vom Real- und Imaginäranteil der bei der jeweiligen Frequenz an der Spule oder Fühlerspule während der Messung an einem Prüfling auftretenden Ausgangsgröße und in Abhängigkeit von den überlagerten Basiskompensationswerten eine erste und eine zweite, einem Real- bzw. einem Imaginäranteil entsprechende Kompensationsgröße gebildet werden und daß die erste und die zweite Kompensationsgröße zu einer der Ausgangsgröße der Spule oder Fühlerspule zu überlagernden, analogen Kompensationsgröße und zu einer Steuergröße vereinigt werden, mit der der Verstärkungsfaktor eines Verstärkers, dessen Eingang die mit der analogen Kompensationsgröße überlagerte Ausgangsgröße der Spule zugeführt wird, im Sinne einer optimalen Ausnutzung des Dynamikbereichs des Verstärkers eingestellt wird. Hierdurch ist es möglich, auch bei großen Pegelunterschieden in der Ausgangsgröße der Spule genau zu messen. Beispielsweise erzeugen Störeffekte, wie der Abhebeeffekt oder ferritische Einschlüsse, viel größere Signalpegel als Risse im Prüfling. Jedoch müssen Risse aus Sicherheitsgründen häufig noch bei sehr kleinen Abmessungen erkannt werden. Bei einer Erhöhung der Verstärkung zur Feststellung kleiner Nutzsignale, die Störsignalen mit größeren Pegeln überlagert sind, werden die von der Ausgangsgröße beaufschlagten Verstärker weit übersteuert. Dann lassen sich kleine Signale, wie sie von Rissen verursacht werden, nicht mehr erfassen. Dieser Nachteil wird durch das oben erläuterte Verfahren zur dynamischen Kompensation von Störeinflüssen beseitigt.

Bei einer zweckmäßigen Ausführungsform wird die Spule über einer von Materialstörungen freien Stelle eines Prüflings angeordnet, danach wird die Ausgangsgröße der Spule oder Fühlerspule gemessen und in ihren Realanteil und Imaginäranteil zerlegt, wobei der Real- und Imaginäranteil zur Nachbildung einer stationären Vergleichsspule gespeichert werden. Es werden hierdurch die für eine Vergleichsspule typischen Kennwerte ermittelt, die für nachfolgende Meßvorgänge zur Verfügung stehen. Das Wirbelstromprüfgerät kann dann bei diesen Meßvorgängen im Absolut- oder Tastspulbetrieb arbeiten, ohne daß eine zusätzliche Spule für die Erzeugung der Referenzgrößen benötigt wird.

Weitere vorteilhafte Ausgestaltungen des erfindungsgemäßen Verfahrens sind in den Ansprüchen 3 bis 6 beschrieben.

Eine Vorrichtung der im Oberbegriff des Anspruchs 7 beschriebenen Gattung besteht zur Durchführung des Verfahrens erfindungsgemäß darin, daß zwischen der Spule bzw. der Fühlerspule und dem Verstärker eine noch einen zweiten Eingang aufweisende Kompensationsschaltung angeordnet ist, daß die dem Verstärker nachgeschaltete Anordnung aus Abtast- und Halteschaltungen besteht, die je über Analog-Digital-Umsetzer mit einem Datenbus verbunden sind, der mit Speichern für die Nullpunktkorrektur, mit Addier-Subtrahierwerken und mit Eingängen des Rechenwerks in Verbindung steht, von dem weitere Eingänge an ein Steuerwerk gelegt sind und das an den Steuereingang des Verstärkers angeschlossene Ausgänge und mit einem Vektorgenerator verbundene Ausgänge aufweist, dessen Ausgang an dem eine analoge Kompensationsgröße verfügbar ist, an den zweiten Eingang der Kompensationsschaltung gelegt ist.

Bei einer vorteilhaften Ausführungsform sind im Rechenwerk je ein Register für die Speicherung von Basiskompensationswerten, die dem Real- oder Imaginäranteil der Ausgangsgröße der Spule oder Fühlerspule zugeordnet sind, und je ein Register für die Speicherung des Real- bzw. Imaginäranteils der gemessenen Ausgangsgröße der Spule bzw. Fühlerspule vorgesehen, wobei die den Realanteilen und die den Imaginäranteilen zugeordneten Register jeweils an eine Addier/Subtrahierschaltung angeschlossen sind, denen je ein für die Ergebnisspeicherung bestimmtes Register nachgeschaltet ist, und wobei die Ausgänge dieser Register mit den Eingängen des Vektorgenerators verbunden sind. Diese Anordnung ermöglicht eine schnelle Erzeugung der Kompensationsgröße. Die Basiskompensationswerte enthalten Faktoren, die zum Ausgleich von gerätebedingten Fehlern erforderlich sind.

Vorzugsweise sind die Ausgänge der Addier-Subtrahierwerke mit dem Steuerwerk verbunden.

Bei einer zweckmäßigen Ausführungsform enthält das Steuerwerk einen Mikrorechner mit einem Daten- und Programmspeicher.

Weitere vorteilhafte Ausführungsformen der erfindungsgemäßen Vorrichtung sind in den Ansprüchen 11 bis 13 beschrieben.

Die Erfindung wird im folgenden anhand eines in einer Zeichnung dargestellten Ausführungsbeispiels näher erläutert, aus dem sich weitere Einzelheiten, Merkmale und Vorteile ergeben.

Es zeigen :

Figur 1 ein Blockschaltbild einer Vorrichtung zur Werkstoffprüfung nach dem Wirbelstromprinzip,

Figuren 2a-2d Zeitdiagramme verschiedener Signale, die in der Vorrichtung gemäß Fig. 1 auftreten,

Figur 3 ein Zeitdiagramm der Abtastzeiten und der Einführungszeiten der Kompensationsgrößen bei verschiedenen Frequenzen.

Ein Spulensystem 1, bei dem es sich um eine Absolut-, Differenz- oder Tastsonden-Spule handeln kann, ist mit einem Spulentreiber 2 verbunden, mit dem verschiedene Frequenzen zeitlich nacheinander erzeugt werden. Die nicht näher bezeichnete Meßspule ist mit Ausgängen an einen Differentialverstärker 3 angeschlossen, dessen Ausgänge einen Eingang einer zwei Eingänge aufweisenden Kompensationsschaltung 4 speist. Bei der Kompensationsschaltung 4 handelt es sich vorzugsweise um einen Differentialverstärker mit einem nichtnegierenden und einem negierenden Eingang. An den Differentialverstärker 4 ist ein weiterer Verstärker 5 angeschlossen, der für die Hauptverstärkung bestimmt ist. Der Verstärker 5 enthält einen wahlweise zuschaltbaren Rückkopplungszweig 6. Mit dem Ausgang des Verstärkers 5 sind die Eingänge zweier Abtast- und Halteschaltungen 7 verbunden, denen über Leitungen 9 je ein Analog-Digital-Umsetzer 8 nachgeschaltet ist. Die Ausgänge der Analog-Digital-Umsetzer 8 sind an je einen Datenbus 10 gelegt. Mit dem jeweiligen Datenbus 10 sind weiterhin Register 11 und Eingänge von Addier/Subtrahierwerken 12 verbunden. Jeder Bus 10 speist ferner parallele Eingänge eines Rechenwerkes 13, das nicht näher bezeichnete Register, Addier/Subtrahierwerke und Schaltungsanordnungen zum Quadrieren und Radizieren enthält.

Zwei Reihen nicht näher bezeichneter paralleler Ausgänge des Rechenwerks 13 sind mit Eingängen eines Vektorgenerators 14 verbunden, der vom Rechenwerk 13 ausgegebene digitale erste und zweite Kompensationsgrößen zuerst in analoge Werte umwandelt und diese in zwei Kanälen Multiplizierern 15, 16 zuführt. Im ersten Multiplizierer 15 wird die erste nunmehr analoge Kompensationsgröße mit einem dem Sinus des Treibersignals der Spule entsprechenden Signal multipliziert. Im zweiten Multiplizierer 16 wird die zweite nunmehr analoge zugeführte Kompensationsgröße mit einem dem Cosinus des Treibersignals der Spule entsprechenden Signal multipliziert. Die Ausgangssignale der Multiplizierer 15, 16 werden einander überlagert und danach dem zweiten Eingang des Differentialverstärkers 4 als analoge Kompensationsgröße zugeführt.

Weitere Eingänge 17 des Rechenwerks 13 sind mit einem Steuerwerk 18 verbunden, an das auch die Ausgänge der Addier/Subtrahierwerke 12 angeschlossen sind.

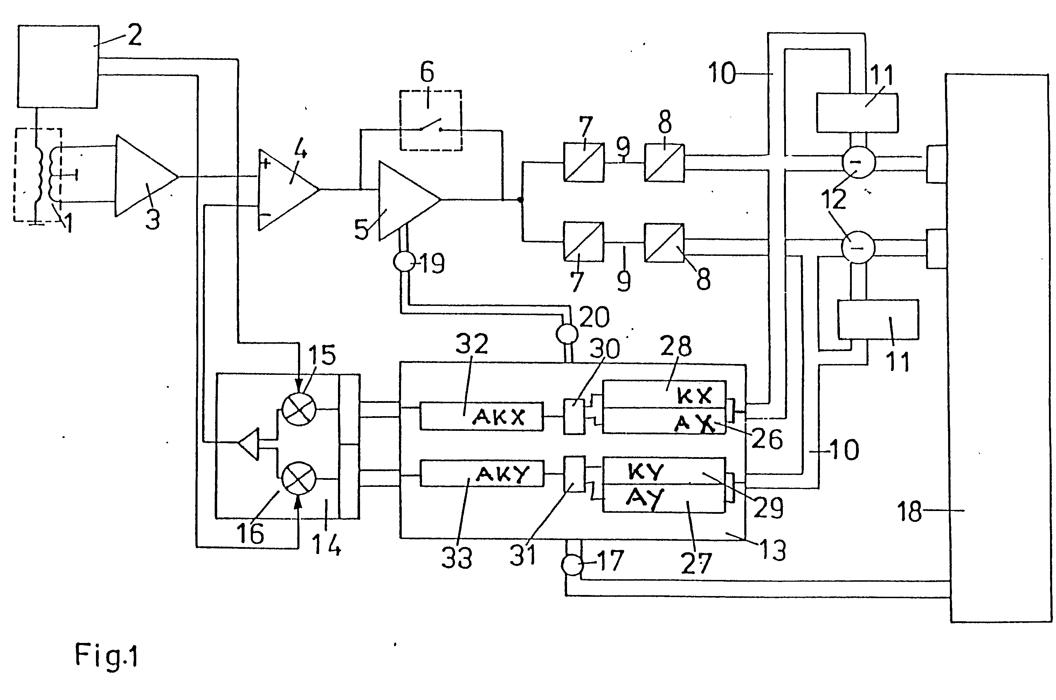

Der Verstärker 5 hat Steuereingänge 19 für die Veränderung des Verstärkungsfaktors. Die Eingänge 19 sind an Ausgänge 20 des Rechenwerks 13 angeschlossen, denen eine die Quadratwurzel aus der Summe der Quadrate der Eingangsdaten bildende Anordnung im Rechenwerk 13 vorgeschaltet ist. Das Steuerwerk 18 enthält einen nicht näher dargestellten Mikrorechner, der mit einem Daten- und einem Programmspeicher versehen ist. Die Abtast- und Halteschaltungen 7, die Analog-Digital-Umsetzer 8, die Register 11 und die Addier/Subtrahierwerke 12 arbeiten ebenso wie das Rechenwerk 13 unter Kontrolle des Steuerwerks 18. Die entsprechenden Steuerleitungen sind jedoch nicht in Fig. 1 dargestellt.

Das Rechenwerk 13 enthält Register 26 und 27, die für die Speicherung des Realanteils und des Imaginäranteils der jeweils gemessenen Größe bestimmt sind. Die Register 26 und 27 werden von den Analog-Digital-Umsetzern 8 über die nachgeschalteten Datenbusleitungen gespeist. In Fig. 1 ist die Funktion der Register 26, 27 jeweils durch die Bezeichnung AX und AY angedeutet. Die Buchstaben X bzw. Y kennzeichnen den Real- bzw. Imaginäranteil der durch A angedeuteten Meßgröße.

Zwei weitere Register 28, 29 des Rechenwerks 13 dienen zur Aufnahme von Basiskompensationswerten. Die Register 28, 29 sind ebenfalls an je einen Datenbus 10 angeschlossen. Bei den Basiskompensationsgrößen handelt es sich um zu jeder Messung gehörende, konstante Werte, die auch Faktoren enthalten, mit denen gerätebedingte Meßfehler ausgeglichen werden. Die Speicherung konstanter Kompensationsgrößen ist in Fig. 1 an den Registern 28, 29 durch den Buchstaben K angedeutet, während die Zuordnung zum Real- bzw. Imaginäranteil mit X bzw. Y gekennzeichnet ist. Jedes dem Realanteil oder Imaginäranteil zugeordnete Paar von Registern 26, 28 bzw. 27, 29 ist an eine Addier-Subtrahierschaltung 30 bzw. 31 angeschlossen. In den Schaltungen 30, 31 werden die Eingangswerte vorzeichenrichtig addiert. Den Addier-Subtrahierschaltungen 30, 31 sind jeweils Register 32, 33 nachgeschaltet, in denen das Ergebnis der Addition gespeichert wird. Zur Kennzeichnung ihrer Funktion sind die Register 32, 33 in Fig. 1 mit AKX und AKY bezeichnet. Die Ausgänge der Register 32, 33 speisen Eingänge des Vektorgenerators 14.

Die für die Berechnung der Quadratwurzel der Summe der Quadrate der Daten an ihren Eingängen bestimmte, im Rechenwerk 13 vorhandene, nicht näher dargestellte Anordnung wird von den Registern 32 und 33 gespeist.

Die Eingänge 17 sind an die Register 32, 33 gelegt. Die Register 32, 33 können deshalb wahlweise Daten von den Schaltungen 30, 31 oder vom Steuerwerk 18 erhalten.

Die Ausgangsgröße des Spulensystems 1 wird in analoger Form über den Differentialverstärker 3, den Differentialverstärker 4 und den Hauptverstärker 5 an die Eingänge der Abtast- und Halteschaltungen 7 angelegt. Die Ausgangssignale des Verstärkers 5 werden in ihre Real- und Imaginäranteile zerlegt, indem die Sinus- und Cosinus-Komponenten zu bestimmten Zeitpunkten gemessen werden. Der Realanteil und der Imaginäranteil wird jeweils in eine der Abtast- und Halteschaltungen 8 eingegeben. Nach der Umwandlung in digitale Werte stehen der Realanteil und der Imaginäranteil auf je einem Datenbus 10 an. In den Registern 11 sind Abgleichwerte enthalten, die von den aktuellen Meßwerten subtrahiert werden, bevor sie vom Steuerwerk 18 weiterverarbeitet werden, um den jeweils interessierenden Parameter aus den nicht interessierenden Parametern auszusondern.

Solange die Eingangssignale am Differentialverstärker 3 und den nachgeschalteten Verstärkern nicht in einem weiten Dynamikbereich schwanken, läßt sich auf die oben erläuterte Weise auch ohne Kompensationsgrößen eine genaue Messung des Prüflings erreichen.

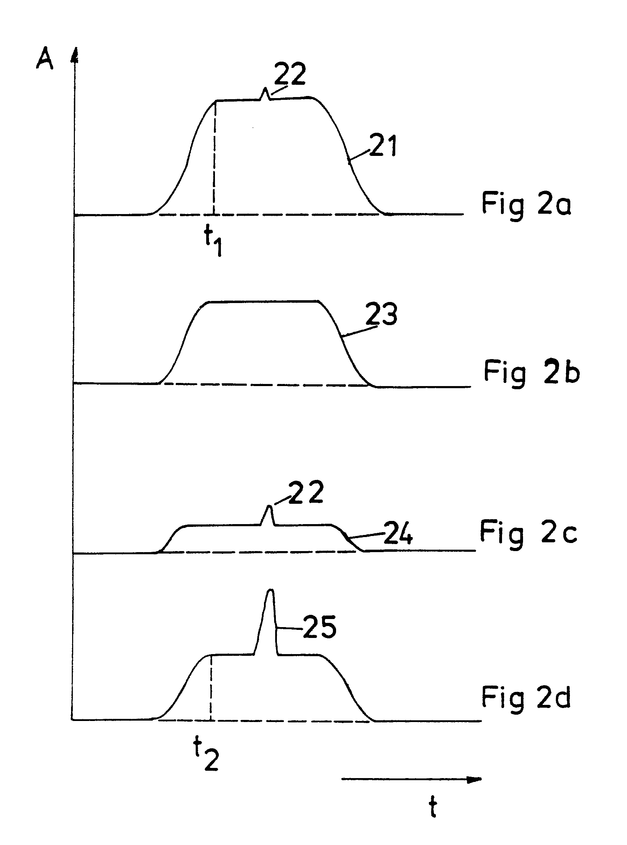

Vielfach enthalten die Ausgangsgrößen des Spulensystems 1 hohe Störsignalanteile, während der für die jeweilige Messung der Prüflingseigenschaften relevante Signalanteil nur einen geringen Pegel hat. Anhand der Fig. 2a ist dies erkennbar. Einem Störsignal 21 mit hohem Pegel ist ein Nutzsignal 22 mit kleinem Pegel überlagert. Störsignalpegel der in Fig. 2a gezeigten Art werden beispielsweise durch den Abhebeeffekt, durch ferritische Einschlüsse im Prüfling usw. hervorgerufen. Diese Störsignale sind stärker ausgeprägt als das zum Beispiel durch einen Riß im Prüfling erzeugte Nutzsignal 22. Der in Fig. 2a dargestellte Signalverlauf tritt zum Beispiel bei einer der für die Prüfung bestimmten Frequenzen auf, denen bestimmte Frequenztore, d. h. Zeiträume, zugeordnet sind. Zu Beginn des Frequenztors nach dem Abklingen der Einschwingvorgänge während eines Zeitpunkts $t_1$ stellt das Rechenwerk den Pegel des Störsignals 21 fest. Der Realanteil und der Imaginäranteil des Störsignals werden im Rechenwerk 13 in die Register 26, 27 eingespeichert und danach mit gespeicherten Konstanten vorzeichenrichtig aufaddiert. Diese für eine bestimmte Meßmethode typischen Konstanten werden in die Register 28, 29 des Rechenwerks 13 eingegeben. Die Ergebnisse dieser Verarbeitung des Realanteils und des Imaginäranteils werden den Registern 32, 33 zugeführt und gelangen je als erste und zweite Konpensationsgröße zu den Eingängen des Vektorgenerators 14, an dessen Ausgang die analoge Kompensationsgröße erzeugt wird, die in Fig. 2b dargestellt und mit 23 bezeichnet ist. Der zeitliche Verlauf der analogen Kompensationsgröße 23 entspricht annähernd demjenigen der Störgröße 21. Durch die Überlagerung der analogen Kompensationsgröße 23 und der Störgröße 21 im Differentialverstärker 4 wird dem Eingang des Verstärkers 5 ein in Fig. 2c gezeigtes entstörtes Signal 24 zugeführt. Diesem entstörten Signal ist wiederum das Nutzsignal 22 überlagert. Das Nutz/Störsignalverhältnis ist bei dem in Fig. 2c dargestellten Verlauf des Eingangssignals des Verstärkers 5 wesentlich günstiger als bei dem in Fig. 2a gezeigten Kurvenverlauf. Durch die Überlagerung zwischen der Ausgangsgröße und der analogen Kompensationsgröße wird ein günstiger Arbeitspunkt des Verstärkers 5 erreicht. Somit wird die Gefahr der Übersteuerung des Verstärkers 5 vermieden. Nach einer Übersteuerung wäre die Erkennung von Rißsignalen nicht mehr möglich.

Aus dem Real- und Imaginäranteil des Störsignals werden demnach eine erste und eine zweite digitale Kompensationsgröße erhalten. Diese Kompensationsgrößen oder Werte, die diesen Kompensationsgrößen proportional sind, werden quadriert und aufsummiert. Durch Radizieren dieser Summe der Quadrate ergibt sich eine Steuergröße für den Steuereingang 19 des Verstärkers 5. Die Verstärkung wird in Abhängigkeit von der ersten und zweiten digitalen Kompensationsgröße so hoch eingestellt, daß der Dynamikbereich für die bei der Messung vorkommenden Signalpegel am Spulenausgang optimal ausgenutzt wird. Am Ausgang des Verstärkers 5 entsteht daher das in Fig. 2d gezeigte Signal mit einem hohen Nutzsignal 25, das einem Fehler im Prüfling entspricht. Über die Abtast- und Halteschaltungen 7 und die Analog-Digital-Umsetzer 8 wird also bei einem Fehler im Prüfling ein größerer Fehlersignalwert festgestellt. Es stehen daher für die Digitalwerte der Real- und Imaginäranteile mehr Stellen in den von den Analog-Digital-Umsetzern ausgegebenen binären Wörtern zur Verfügung.

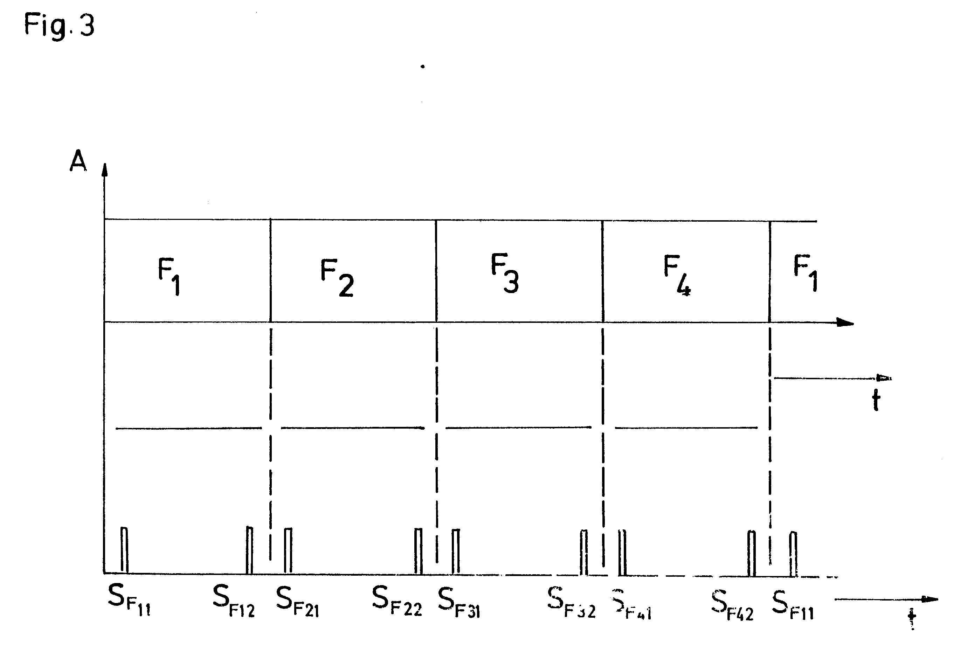

Es sei angenommen, daß der Spulentreiber 2 in vier aufeinanderfolgenden Zeiträumen vier verschiedene Frequenzen erzeugt. Diese Zeiträume sind als Frequenztore längs der Abszissenachse eines Koordinatensystems in Fig. 3 dargestellt, in dessen Ordinatenrichtung schematisch Amplituden gezeigt sind. Die Frequenztore sind mit $F_1$, $F_2$, $F_3$ und $F_4$ bezeichnet.

Zu Beginn eines jeden Frequenztors erhält das Rechenwerk 13 einen Probewert der Ausgangsgröße des Spulensystems 1. Die Zeitpunkte der Vorgabe der Probewerte sind etwas gegen den Einschaltzeitpunkt des jeweiligen Frequenztors verschoben. In Fig. 3 sind die Zeitpunkte der Übernahme der Probewerte in das Rechenwerk für die verschiedenen Frequenztore jeweils mit $S_{F11}$, $S_{F21}$, $S_{F31}$ und $S_{F41}$ bezeichnet. Nach der Übernahme der Probewerte bestimmt das Rechenwerk 13 die für die jeweilige Frequenz maßgebenden Kompensationsgrößen und stellt den Verstärkungsfaktor des Verstärkers 5 entsprechend ein. Einschwingprobleme treten praktisch nur bei dem kürzesten Frequenztor auf. Dieses kann zum Beispiel 40 µs lang sein. Es ist möglich, ein Rechenwerk 13 zu verwenden, das für die erforderlichen Rechnungen und den Datentransport etwa 5 µs benötigt. Für die Messung des Prüflings unter Ausnutzung der aus den Probewerten bestimmten Kompensationsgrößen bleiben daher beim kürzesten Frequenztor rund 30 µs übrig. Dieser Zeitraum ist ausreichend, da der Fluß der Wirbelströme von den Vorgängen in dem Auswerteteil nicht beeinflußt wird.

Die Frequenztore $F_1$, $F_2$, $F_3$, $F_4$ sind nur von kurzer Dauer. Die zu den Zeitpunkten $S_{F11}$, $S_{F12}$, $S_{F21}$ usw. abgetasteten Meßwerte sind lokal und zeitlich praktisch invariant. Der in Fig. 2 gezeigte Verlauf der Ausgangsgröße wird mittels mehrerer Gruppen von Frequenztoren $F_1$, $F_2$, $F_3$, $F_4$ erfaßt. Unter der Annahme, daß der Zeitpunkt $t_1$ gemäß Fig. 2a mit dem Abtastzeitpunkt $S_{F11}$ übereinstimmt, ergibt sich der Abtastzeitpunkt $S_{F12}$ z. B. zu einem Zeitpunkt $t_2$, der unter Bezug auf die Dauer der in Fig. 2 dargestellten Kurve in kurzem zeitlichen Abstand auf den Zeitpunkt $t_1$ folgt. Liegt die Größe des durch die Messung noch zu erfassenden Fehlers fest, dann muß die Dauer der Frequenztore $F_1$, $F_2$, $F_3$, $F_4$ und die Aufeinanderfolge der Gruppen von Frequenztoren auf die Relativgeschwindigkeit abgestimmt werden, mit der die Spule 1 längs des Prüflings bewegt wird. Es sollten dabei mehrere Gruppen von Frequenztoren während des Vorbeilaufs der Spule an einer Strecke, die dem kleinsten zu erfassenden Fehler entspricht, erzeugt werden. Infolge der hohen Frequenzen während der Frequenztore kann z. B. eine Gruppe von vier Frequenztoren nur 1 ms beanspruchen, so daß die während der Abtastung auftretende Relativbewegung zwischen Spule und Prüfling nur gering ist. Eine hierdurch verursachte Beeinflussung der Messung ist deshalb vernachlässigbar.

Die während der Abtastzeitpunke $S_{F11}$, $S_{F21}$, $S_{F31}$ und $S_{F41}$ bestimmten Werte dienen für die Erzeugung der Kompensationsgröße. Die Ausgangssignale der Analog-Digital-Umsetzer 8 werden daher dem Rechenwerk 13 zugeführt. Meßwerte, die zu den Abtastzeiten $S_{F12}$, $S_{F22}$, $S_{F32}$ und $S_{F42}$ gewonnen werden, gelangen über die Addier/Subtrahierwerke 12 ins Steuerwerk 18, in dem sie für die Fehlererfassung aufbereitet bzw. ausgewertet werden.

Unter der Annahme, daß das Störsignal 21 eine maximale Höhe von etwa 3 Volt hat, wird dieses während der Zeiträume $S_{F11}$, $S_{F21}$, $S_{F31}$ und $S_{F41}$ mit einer Toleranz von + 200 mV gemessen und im Rechenwerk verarbeitet, das eine Kompensationsgröße und einen Einstellwert fürt den Verstärkungsfaktor erzeugt. Der Verstärkungsfaktor wird am Verstärker 5 eingestellt und dem Steuerwerk 18 übermittelt. Jeweils zu späteren Zeitpunkten $S_{F12}$, $S_{F22}$, $S_{F32}$, $S_{F42}$ während der Frequenztore $F_1$, $F_2$, $F_3$, $F_4$ übernimmt das Steuerwerk die Meßwerte und fügt den zugehörigen Kompensationswert im Bereich der höherwertigen Stellen der Datenwörter hinzu.

Durch das Rechenwerk 13 und den Vektorgenerator 14 kann vorteilhafterweise eine stationäre Vergleichsspule nachgebildet werden. Die für eine solche Vergleichsspule typischen Kennwerte sind dabei im Rechenwerk 13 gespeichert und werden während des Meßvorgangs an die Eingänge des Vektorgenerators 14 gelegt. Hierdurch wird ein Betrieb des Wirbelstromprüfgerätes mit Absolutspulen oder Tastspulen möglich, ohne daß eine zusätzliche Spule für die Referenz benötigt wird. Daher entfallen auch die hohen Aufwendungen, die durch die scharfen Anforderungen an die mechanische und technische Konstanz der Vergleichsspule erforderlich sind. Die Nachbildung der Vergleichsspule durch das Rechenwerk 13 und den Vektorgenerator 14 liefert ebenso genaue Meßwerte wie sie mit einer Vergleichsspule hoher mechanischer und thermischer Konstanz erzielt werden.

Die Ermittlung der Kennwerte erfolgt durch die Messung des Ausgangssignals der Spule 1 über einer von Materialstörungen freien Oberflächenstelle des Prüflings. Die in den Real- und Imaginäranteil zerlegte Ausgangsgröße dieser Messung wird im Steuerwerk 18 abgelegt. Die Kennwerte dienen bei der Absolut- oder Tastspulbetriebsweise als weitere Kompensationswerte.

Im Steuerwerk 18, insbesondere im Speicher des Mikrorechners, können die bei der Messung eines Prüflings gewonnenen Werte gespeichert werden, die aufgrund des großen Dynamikbereichs sehr genau sind. Bei nachfolgenden Messungen an Prüflingen stehen diese Werte noch zur Verfügung. Daher können Verwechselungsprüfungen der später gemessenen Daten unter Ausnutzung der zuerst mit einem Prüfling gewonnenen Werte durchgeführt werden, wobei das Steuerwerk 18 die gespeicherten Werte den Anschlüssen 17 als Referenzwerte zuführt. Es läßt sich daher ein sehr genauer Vergleich durchführen. Unter Verwechselungsprüfung sind Prüfungen zu verstehen, mit denen an mindestens zwei Prüflingen festgestellt wird, ob sie gleich oder ungleich aufgebaut sind.

Es ist auch möglich, die bei der Messung an den verschiedenen Stellen eines Prüflings erhaltenen Meßwerte ortsgetreu im Steuerwerk 18 bzw. Speicher des Mikrorechners abzulegen. Bei Wiederholungsprüfungen gibt das Steuerwerk 18 die entsprechenden Werte ebenfalls ortsgetreu an die Eingänge 17 des Rechenwerks 13 als Referenzwerte ab. Daher lassen sich die bei verschiedenen Prüflingen vorhandenen Unterschiede mit hoher Genauigkeit feststellen.

Am Prüfling sind häufig regelmäßige Oberflächenveränderungen vorhanden. Diese können zum Beispiel Rattermarken von Werkzeugen sein. Auch Rohrenden von an den Stirnseiten zusammengesetzten Einzelrohren rufen ebenso wie Rattermarken eine Fehleranzeige hervor, obwohl es sich nicht um eigentliche Fehler handelt. Die von solchen Veränderungen hervorgerufenen unerwünschten Fehlermeldungen können beseitigt werden, indem das Steuerwerk 18 über die Anschlüsse 17 dem Rechenwerk 13 entsprechende Kompensationswerte übermittelt. Das Steuerwerk 18 bildet dabei ein Verzögerungsglied und gibt die Kompensationswerte orts- und zeitsynchron an das Rechenwerk 13 ab, das über den Vektorgenerator 14 ein Kompensationssignal erzeugt, mit dem die störenden Signalanteile im resultierenden Signal beseitigt werden. Ortssynchron bedeutet hierbei, daß die an einer bestimmten Stelle an der Oberfläche eines ersten Prüflings erhaltenen Kompensationswerte dann ausgegeben werden, wenn sich die Spule oder Fühlerspule bei einem anderen Prüfling an der gleichen Oberflächenstelle befindet.

**Patentansprüche**

1. Werkstoffprüfverfahren nach dem Wirbelstromprinzip, bei dem von einer relativ zu einem Prüfling bewegten Spule (1) magnetische Wechselfelder mit einer Frequenz oder nacheinander mit jeweils einer anderen Frequenz erzeugt werden, die in dem Prüfling Wirbelströme induzieren, die ihrerseits ein sekundäres Feld in der Spule (1) oder einer Fühlerspule hervorrufen, deren Ausgangsgröße in ihren Real- und Imaginäranteil zerlegt wird, wobei dem Real- und Imaginäranteil jeweils gespeicherte Basiskompensationswerte überlagert werden, dadurch gekennzeichnet, daß in Abhängigkeit vom Real- und Imaginäranteil der bei der jeweiligen Frequenz an der Spule (1) oder Fühlerspule während der Messung an einem Prüfling auftretenden Ausgangsgröße und in Abhängigkeit von den überlagerten Basiskompensationswerten eine erste und eine zweite, einem Real- bzw. einem Imaginäranteil entsprechende Kompensationsgröße gebildet werden und daß die erste und die zweite Kompensationsgröße zu einer der Ausgangsgröße der Spule (1) oder Fühlerspule zu überlagernden, analogen Kompensationsgröße und zu einer Steuergröße vereinigt werden, mit der der Verstärkungsfaktor eines Verstärkers (5), dessen Eingang die mit der analogen Kompensationsgröße überlagerte Ausgangsgröße der Spule (1) zugeführt wird, im Sinne einer optimalen Ausnutzung des Dynamikbereiches des Verstärkers (5) eingestellt wird.

2. Werkstoffprüfverfahren nach Anspruch 1, dadurch gekennzeichnet, daß die Spule (1) über einer von Materialstörungen freien Stelle des Prüflings angeordnet wird, daß danach die Ausgangsgröße der Spule (1) oder Fühlerspule gemessen und in ihren Real- und Imaginäranteil zerlegt wird und daß der Real- und Imaginäranteil zur Nachbildung einer stationären Vergleichsspule gespeichert werden.

3. Werkstoffprüfverfahren nach Anspruch 1 oder 2, dadurch gekennzeichnet, daß durch das nacheinander erfolgende Anlegen von Spulentreibersignalen mit verschiedenen Frequenzen an die Spule (1) zeitliche Frequenztore ($F_1$, $F_2$, $F_3$, $F_4$) erzeugt werden und daß zu einem ersten Zeitpunkt ($S_{F11}$, $S_{F21}$, $S_{F31}$, $S_{F41}$) innerhalb eines jeden Frequenztors ($F_1$, $F_2$, $F_3$, $F_4$) aus der Abtastung der Ausgangsgröße der Spule (1) oder Fühlerspule die erste und die zweite Kompensationsgröße bestimmt werden, die mit einem für die Fehlerauswertung bestimmten Meßwert, der bei einer zu einem späteren Zeitpunkt ($S_{F12}$, $S_{F22}$, $S_{F32}$, $S_{F42}$) innerhalb des Frequenztors ($F_1$, $F_2$, $F_3$, $F_4$) vorgenommenen Abtastung der Ausgangsgröße der Spule (1) oder Fühlerspule erhalten wird, zu der eine Kompensationsschaltung (4) beaufschlagenden, analogen Kompensationsgröße vereinigt werden.

4. Werkstoffprüfverfahren nach Anspruch 3, dadurch gekennzeichnet, daß für die Auflösung von vorgegebenen Fehlergrößen eine bestimmte Wegstrecke von der Spule (1) oder Fühlerspule längs des Prüflings zurückzulegen ist und daß die zeitliche Dauer der Frequenztore ($F_1$, $F_2$, $F_3$, $F_4$) gegenüber der für die Zurücklegung der Wegstrecke notwendigen Zeit kurz ist.

5. Werkstoffprüfverfahren nach einem der vorhergehenden Ansprüche, dadurch gekennzeichnet, daß bei der Messung an einem ersten Prüfling erhaltene Referenzdaten in einem Steuerwerk (18) gespeichert werden und daß die Referenzdaten bei nachfolgenden Messungen von Prüflingen zur Feststellung der Gleichheit der Prüflinge mit dem ersten Prüfling einem Rechenwerk (13) als Vergleichswerte zugeführt werden.

6. Werkstoffprüfverfahren nach einem der vorhergehenden Ansprüche, dadurch gekennzeichnet, daß bei der Messung an einem ersten Prüfling erhaltene Referenzdaten in einem Steuerwerk (18) gespeichert werden und daß die Referenzdaten bei Wiederholungsprüfungen als Kompensationsdaten in der jeweils gleichen Stellung der Spule (1) in bezug auf den Prüfling einem Rechenwerk (13) zugeführt werden.

7. Vorrichtung zur Werkstoffprüfung nach dem Wirbelstromprinzip, bei dem von einer relativ zu einem Prüfling bewegten Spule (1) magnetische Wechselfelder mit einer Frequenz oder nacheinander mit jeweils einer anderen Frequenz erzeugt werden, die in dem Prüfling Wirbelströme induzieren, die ihrerseits ein sekundäres Feld in der Spule (1) oder einer Fühlerspule hervorrufen, der ein eine veränderbare Verstärkung aufweisender Verstärker (5) nachgeschaltet ist, an dessen Eingang eine den Real- und Imaginäranteil der Ausgangsgröße der Spule (1) oder Fühlerspule erzeugende Anordnung (7, 8) angeschlossen ist, mit der ein Rechenwerk (13) verbunden ist, in dem Basiskompensationswerte gespeichert sind, zur Durchführung des Verfahrens nach einem der vorhergehenden Ansprüche, dadurch gekennzeichnet, daß zwischen der Spule (1) bzw. der Fühlerspule und dem Verstärker (5) eine noch einen zweiten Eingang aufweisende Kompensationsschaltung (4) angeordnet ist, daß die dem Verstärker (5) nachgeschaltete Anordnung aus Abtast- und Halteschaltungen (7) besteht, die je über Analog-Digital-Umsetzer (8) mit einem Datenbus (10) verbunden sind, der mit Speichern (11) für die Nullpunktkorrektur, mit Addier-Subtrahierwerken (12) und mit Eingängen des Rechenwerks (13) in Verbindung steht, von dem weitere Eingänge (17) an ein Steuerwerk (18) gelegt sind und das an den Steuereingang des Verstärkers (5) angeschlossene Ausgänge (20) und mit einem Vektorgenerator (14) verbundene Ausgänge aufweist, dessen Ausgang, an dem eine analoge Kompensationsgröße verfügbar ist, an den zweiten Eingang der Kompensationsschaltung (4) gelegt ist.

8. Vorrichtung nach Anspruch 7, dadurch gekennzeichnet, daß im Rechenwerk (13) je ein Register (28, 29) für die Speicherung von Basiskompensationswerten, die dem Real- oder Imaginäranteil der Ausgangsgröße der Spule (1) oder Fühlerspule zugeordnet sind, und je ein Register (26, 27) für die Speicherung des Real- bzw. Imaginäranteils der gemessenen Ausgangsgröße der Spule (1) bzw. Fühlerspule vorgesehen sind, daß die den Realanteilen und die den Imaginäranteilen zugeordneten Register (26, 28 ; 27, 29) jeweils an eine Addier/Subtrahierschaltung (30, 31) angeschlossen sind, denen je ein für die Ergebnisspeicherung bestimmtes Register (32, 33) nachgeschaltet ist, und daß die Ausgänge dieser Register (32, 33) mit den Eingängen des Vektorgenerators (14) verbunden sind.

9. Vorrichtung nach Anspruch 7 oder 8, dadurch gekennzeichnet, daß die Ausgänge der Addier/Subtrahierwerke (12) mit dem Steuerwerk (18) verbunden sind.

10. Vorrichtung nach Anspruch 7 oder einem der folgenden Ansprüche, dadurch gekennzeichnet, daß das Steuerwerk (18) einen Mikrorechner mit einem Daten- und Programmspeicher enthält.

11. Vorrichtung nach Anspruch 8 oder einem der folgenden Ansprüche, dadurch gekennzeichnet, daß die für die Ergebnisspeicherung bestimmten Register (32, 33) zusätzlich an das Steuerwerk (18) angeschlossen sind und daß in diese Register (32, 33) wahlweise Daten aus den Addier/Subtrahierschaltungen (30, 31) oder aus dem Steuerwerk (18) eingebbar sind.

12. Vorrichtung nach Anspruch 8 oder einem der folgenden Ansprüche, dadurch gekennzeichnet, daß an die für die Ergebnisspeicherung bestimmten Register (32, 33) eine Rechenschaltung angeschlossen ist, die die Wurzel aus der Summe der Quadrate der Registerinhalte bestimmt und deren Ausgang an den Steuereingang (19) des Verstärkers (5) gelegt ist.

13. Vorrichtung nach Anspruch 7 oder einem der folgenden Ansprüche, dadurch gekennzeichnet, daß die an das Steuerwerk (18) angeschlossenen Eingänge des Rechenwerks (13) bei Absolut- oder Tastspulenbetrieb mit den Real- und Imaginäranteilen für die Nachbildung einer stationären Vergleichsspule beaufschlagt sind.

**Claims**

1. A method for materials testing using the eddy current principle, in which a coil (1) moved relative to test specimens generates magnetic alternating fields with one frequency or with a different frequency in each case, said fields inducing eddy currents in the respective test specimen, said eddy currents generating in the coil (1) or in a sensing coil a secondary field, with the output values being split into real and imaginary portions, each of which is superposed by a stored basic compensation value, characterized in that a first and second compensation value corresponding to a real and an imaginary value respectively is formed as a function of the real and imaginary portions of the output value occurring during measurement of a test specimen at the respective frequency at the coil (1) or at a sensing coil, and as a function of the superposed basic compensation values ; and that the first and second compensation values are combined to provide an analog compensation value to be superposed on the output value of the coil (1) or sensing coil, and to provide a control value. Said control value is used to adjust the gain factor of an amplifier (5), whose input is fed to the output value of the coil (1) superposed with the analog compensation value, said adjustment permitting optimum exploitation of the dynamic range of the amplifier (5).

2. A method for materials testing according to Claim 1, characterized in that the coil (1) is arranged above a point in the test specimen that is free of material faults ; that the output value of the coil (1) or sensing coil is then measured and divided up into its real and imaginary portions ; and that said real and imaginary portions are stored to stimulate a stationary reference coil.

3. A method for materials testing according to Claim 1 or 2, characterized in that time-based frequency gates ($F_1$, $F_2$, $F_3$, $F_4$) are generated by consecutive application of coil driver signals having various frequencies to coil (1) ; and that at a first point of time ($S_{F11}$, $S_{F21}$, $S_{F31}$, $S_{F41}$) within each frequency gate ($F_1$, $F_2$, $F_3$, $F_4$) the first and second compensation values are determined by scanning the output value of the coil (1) or sensing coil, said compensation values being combined with a measured value determined for fault evaluation and obtained in a later scan ($S_{F12}$, $S_{F22}$, $S_{F32}$, $S_{F42}$) of the output value of the coil (1) or sensing coil within the frequency gate ($F_1$, $F_2$, $F_3$, $F_4$), to provide the analog compensation value acting on a compensation circuit (4).

4. A method for materials testing according to Claim 3, characterized in that a certain distance must be covered from the coil (1) or sensing coil along the test specimen to resolve the specified gate values, and that the duration of the frequency gates ($F_1$, $F_2$, $F_3$, $F_4$) is short in relation to the time necessary to cover the distance.

5. A method for materials testing according to one of the previous claims, characterized in that reference data obtained by measurement of a first test specimen are stored in a control unit (18) ; and that the reference data are transmitted to an arithmetic unit (13) during subsequent measurements of test specimens as comparative values to determine whether the test specimens are identical to the first test specimen.

6. A method for materials testing according to one of the previous claims, characterized in that reference data obtained by measurement of a first test specimen are stored in a control unit (18) ; and that the reference data from repeat tests are transmitted to an arithmetic unit (13) as compensation data with the coil (1) being in the same position in relation to the test specimen in each case.

7. A device for materials testing using the eddy-current principle, in which a coil (1) moved relative to test specimens generates magnetic alternating fields with one frequency or with a different frequency in each case, said fields inducing eddy currents in the respective test specimen, said eddy currents generating in the coil (1) or in a sensing coil a secondary field, to which coil an amplifier (5) having an adjustable gain factor is connected, at whose input an array (7, 8) generating the real and imaginary portions of the output value of the coil (1) is connected, said array in its turn being connected to an arithmetic unit (13) in which compensation values are stored, for implementation of the method according to one of the previous claims, characterized in that a compensation circuit (4) having a second input too is arranged between the coil (1) or sensing coil and the amplifier (5), that the array connected behind the amplifier (5) comprises sensing and hold circuits (7) connected *via* analog/digital converters (8) to a data bus (10) which is connected to stores (11) for zero point correction, to adder/subtractors (12) and to inputs of the arithmetic unit (13), from which further inputs (17) lead to a control unit (18), and which has inputs (20) connected to the control input of the amplifier (5) and outputs connected to a vector generator (14). The output of said generator, at which an analog compensation value is available, is connected to the second input of the compensation circuit (4).

8. A device according to Claim 7, characterized in that the arithmetic unit (13) contains one register each (28, 29) for storage of basic compensation values allocated to the real or imaginary portion of the output value of the coil (1) or sensing coil, and one register each (26, 27) for storage of the real and imaginary portions of the measured output value of the coil (1) or sensing coil ; that the registers (26, 28) allocated to the real portions and the registers (27, 29) allocated to the imaginary portions are in each instance connected to an adder/subtractor circuit (30, 31) to which are connected registers (32, 33) intended for storage of the respective results, and that the outputs of these registers (32, 33) are connected to the inputs of the vector generator (14).

9. A device according to Claim 7 or 9, characterized in that the outputs fo the adder/subtractors (12, 13) are connected to the control unit (19).

10. A device according to Claim 7 or one of the following claims, characterized in that the control unit (18) contains a microcomputer with a data and program store.

11. A device according to Claim 8 or one of the following claims, characterized in that the registers (32, 33) intended for storage of results are connected to the control unit (18) in addition and that if required data from the adder/subtractor

circuits (30, 31) or from the control unit (18) can be input into said registers (32, 33).

12. A device according to Claim 8 or one of the following claims, characterized in that a computing circuit is connected to the registers (32, 33) intended for storage of results, said circuit determining the root of the sum of the squares of the register contents and having outputs connected to the control input (19) of the amplifier (5).

13. A device according to Claim 7 or one of the following claims, characterized in that the inputs of the arithmetic unit (13) connected to the control unit (18) are, in absolute or sensing coil operation, supplied with the real and imaginary portions for simulation of a stationary reference coil.

## Revendications

1. Procédé d'examen de matériau d'après le principe des courants de Foucault, selon lequel, par une bobine (1) déplacée par rapport à un échantillon, sont produits des champs magnétiques alternatifs, avec une fréquence ou successivement avec chaque fois une autre fréquence, lesquels induisent dans l'échantillon des courants de Foucault qui, de leur côté, provoquent un champ secondaire dans la bobine (1) ou une bobine détectrice, dont la grandeur de sortie est décomposée en ses fractions réelles et imaginaires, des valeurs de compensation de base mémorisées étant chaque fois superposées aux fractions réelles et imaginaires, procédé caractérisé en ce que, en fonction de la fraction réelle et imaginaire de la grandeur de sortie qui se présente pour la fréquence considérée à la bobine (1) ou bobine détectrice pendant la mesure effectuée sur un échantillon et en fonction des valeurs de compensation de base superposées, sont formées une première et une seconde grandeur de compensation correspondant à une fraction réelle ou à une fraction imaginaire respectivement et en ce que la première et la seconde grandeur de compensation sont réunies en une grandeur de compensation analogique à superposer à la grandeur de sortie de la bobine (1) ou bobine détectrice et en une grandeur de commande avec laquelle le facteur d'amplification d'un amplificateur (5), à l'entrée duquel est envoyée la grandeur de sortie de la bobine (1) superposée avec la grandeur de compensation analogique, est réglé dans le sens d'une exploitation optimale du régime de volume de l'amplificateur (5).

2. Procédé d'examen de matériau selon la revendication 1, caractérisé en ce que la bobine (1) est montée sur un endroit de l'échantillon exempt de perturbations de matière, en ce qu'après quoi la grandeur de sortie de la bobine (1) ou bobine détectrice est mesurée et décomposée en ses fractions réelles et imaginaires, et en ce que les fractions réelles et imaginaires sont mémorisées en vue de la reproduction d'une bobine de comparaison fixe.

3. Procédé d'examen de matériau selon la revendication 1 ou 2, caractérisé en ce que, par application s'effectuant en succession de signaux d'excitation avec différentes fréquences à la bobine (1), sont réalisés des intervalles de temps correspondant à des fréquences de porte ($F_1$, $F_2$, $F_3$, $F_4$) et en ce que, à un premier instant ($S_{F11}$, $S_{F21}$, $S_{F31}$, $S_{F41}$) à l'intérieur de chaque intervalle de temps correspondant à une fréquence de porte ($F_1$, $F_2$, $F_3$, $F_4$), à partir de l'observation de la grandeur de sortie de la bobine (1) ou bobine détectrice, sont déterminées la première et la seconde grandeur de compensation qui, avec une valeur de mesure destinée à l'évaluation d'erreurs et obtenue lors d'une observation de la grandeur de sortie de la bobine (1) ou bobine détectrice réalisée à un instant ultérieur ($S_{F12}$, $S_{F22}$, $S_{F32}$, $S_{F42}$) à l'intérieur de l'intervalle de temps correspondant à une fréquence de porte ($F_1$, $F_2$, $F_3$, $F_4$), sont réunies en une grandeur de compensation analogique sollicitant un circuit de compensation (4).

4. Procédé d'examen de matériau selon la revendication 3, caractérisé en ce que, pour éliminer des grandeurs d'erreurs données à l'avance, il y a un trajet déterminé à parcourir par la bobine (1) ou bobine détectrice le long de l'échantillon, et en ce que la durée des intervalles de temps correspondant aux fréquences de porte ($F_1$, $F_2$, $F_3$, $F_4$) est courte par rapport au temps nécessaire pour parcourir ce trajet.

5. Procédé d'examen de matériau selon l'une des revendications précédentes, caractérisé en ce que des données de référence obtenues lors de la mesure effectuée sur un premier échantillon sont mémorisées dans une unité de commande (18) et en ce que les données de référence, lors de mesures suivantes d'échantillons, sont envoyées à une unité de calcul (13) comme valeurs comparatives, pour déterminer l'identité de ces échantillons avec le premier échantillon.

6. Procédé d'examen de matériau selon l'une des revendications précédentes, caractérisé en ce que des données de référence, obtenues lors de la mesure effectuée sur un premier échantillon, sont mémorisées dans une unité de commande (18) et en ce que les données de référence, lors d'examens de répétition, sont envoyées à une unité de calcul (13) en tant que données de comparaison dans la position chaque fois la même de la bobine (1) par rapport à l'échantillon.

7. Dispositif pour l'examen de matériau d'après le principe des courants de Foucault, dans lequel par une bobine (1) déplacée par rapport à un échantillon, sont produits des champs magnétiques alternatifs, avec une fréquence ou successivement avec chaque fois une autre fréquence, lesquels induisent dans l'échantillon des courants de Foucault, qui de leur côté provoquent un champ secondaire dans la bobine (1) ou une bobine détectrice, à la suite de laquelle est monté un amplificateur (5) présentant une amplification variable et à l'entrée duquel est raccordé un dispositif (7, 8) produisant la fraction imaginaire et réelle de la grandeur de sortie de la bobine (1) ou bobine détectrice, et auquel est reliée une

unité de calcul (13) dans laquelle sont mémorisées des valeurs de compensation de base, en vue de mettre en œuvre le procédé selon l'une des revendications précédentes, dispositif caractérisé en ce que, entre la bobine (1) ou la bobine détectrice et l'amplificateur (5) est monté un circuit de compensation (4) présentant encore une seconde entrée, en ce que le dispositif monté à la suite de l'amplificateur (5) est constitué par des circuits (7) d'exploration et de maintien qui sont reliés chacun par l'intermédiaire d'un convertisseur analogique-numérique (8) à un bus de données (10), qui est en liaison avec des mémoires (11) pour la correction du point zéro, avec des unités d'addition-soustraction (12) et avec des entrées de l'unité de calcul (13), à partir de laquelle d'autres entrées (17) sont reliées à une unité de commande (18) et qui comporte des sorties (20) raccordées à l'entrée de commande de l'amplificateur (5) et des sorties reliées à un générateur vectoriel (14) dont la sortie, à laquelle est disponible une grandeur de compensation analogique, est reliée à la seconde entrée du circuit de compensation (4).

8. Dispositif selon la revendication 7, caractérisé en ce que, dans l'unité de calcul (13), sont prévus des registres (28, 29) pour la mémorisation de valeurs de compensation de base qui sont associées à la fraction réelle ou imaginaire de la grandeur de sortie de la bobine (1) ou bobine détectrice, et des registres (26, 27) chacun pour la mémorisation de la fraction réelle ou imaginaire de la grandeur de sortie mesurée de la bobine (1) ou bobine détectrice, en ce que les registres (26, 27, 28, 29) associés aux fractions réelles et associés aux fractions imaginaires sont raccordés chaque fois à l'un des circuits d'addition/soustraction (30, 31), à la suite de chacun desquels est monté un registre (32, 33) destiné à la mémorisation des résultats et en ce que les sorties de ces registres (32, 33) sont reliées aux entrées du générateur vectoriel (14).

9. Dispositif selon la revendication 7 ou 8, caractérisé en ce que les sorties des unités d'addition/soustraction (12) sont reliées à l'unité de commande (18).

10. Dispositif selon la revendication 7 ou l'une des revendications suivantes, caractérisé en ce que l'unité de commande (18) comprend un micro-ordinateur avec un enregistreur de données et de programme.

11. Dispositif selon la revendication 8 ou l'une des revendications suivantes, caractérisé en ce que les registres (32, 33) destinés à la mémorisation des résultats sont raccordés en plus à l'unité de commande (18) et en ce que dans ces registres (32, 33) peuvent être introduites au choix des données provenant des circuits d'addition/soustraction (30, 31) ou de l'unité de commande (18).

12. Dispositif selon la revendication 8 ou l'une des revendications suivantes, caractérisé en ce que, aux registres (32, 33) destinés à la mémorisation des résultats, est raccordé un circuit de calcul qui détermine la racine carrée de la somme des carrés des contenus des registres et dont la sortie est reliée à l'entrée de commande (19) de l'amplificateur (5).

13. Dispositif selon la revendication 7 ou l'une des revendications suivantes, caractérisé en ce que les entrées de l'unité de calcul (13) raccordées à l'unité de commande (18) en fonctionnement avec des bobines non déterminées ou bobines détectrices sont sollicitées par les fractions réelles et imaginaires pour la reproduction d'une bobine de comparaison fixe.

Fig.1

Fig 2a

Fig 2b

Fig 2c

Fig 2d

Fig. 3

0 068 503